# EUROPÄISCHE PATENTSCHRIFT

(11) **EP 4 201 791 B1**
(45) Veröffentlichungstag und Bekanntmachung des Hinweises auf die Patenterteilung: **31.07.2024**
(21) Anmeldenummer: 22215225.8
(22) Anmeldetag: 20.12.2022
(51) Int. Cl.: B62D 25/24

(54) **ABDECKVORRICHTUNG, INSBESONDERE LADEKLAPPENVORRICHTUNG**
COVERING DEVICE, IN PARTICULAR LOADING FLAP DEVICE
DISPOSITIF DE RECOUVREMENT, EN PARTICULIER DISPOSITIF DE CLAPET DE CHARGEMENT

(30) Priorität: 22.12.2021 DE 102021134396
(43) Veröffentlichungstag der Anmeldung: 28.06.2023
(73) Patentinhaber: Valmet Automotive Oy, 23500 Uusikaupunki (FI)
(72) Erfinder: Wesemann, Michael, 49565 Bramsche (DE)
(74) Vertreter: Kronthaler, Schmidt & Coll.

(56) Entgegenhaltungen:
- DE-A1- 102016 110 869
- DE-A1- 102017 212 397
- DE-A1- 4 440 814
- DE-U1- 202021 001 685
- US-A1- 2017 356 228
- US-A1- 2021 246 701

## Beschreibung

Die erfindungsgemäße Technologie betrifft eine Abdeckvorrichtung, insbesondere eine Ladeklappenvorrichtung, mit einer Deckelkomponente und einem Verlagerungsmechanismus für die Deckelkomponente zum Verschließen und Freigeben einer Öffnung in einer Fahrzeugkarosserie nach der im Oberbegriff des Anspruches 1 näher definierten Art.

Aus der DE 10 2017 212 397 A1 ist eine Verlagerungsmechanik für ein bewegliches Karosserieteil zum Abdecken eines Tank- und/oder eines Lademuldenbereiches eines Kraftfahrzeuges bekannt. Das bewegliche Karosserieteil stellt eine Klappe dar, die in eine den Lademuldenbereich vollständig freigebende Position gegenüber einem feststehenden Karosseriebereich absenkbar und unter den feststehenden Karosseriebereich verlagerbar ist. Zur Realisierung der Absenkbewegung der Klappe und anschließenden Verlagerungsbewegung unter den feststehenden Karosseriebereich ist eine Doppel-Kulissenführung vorgesehen, bei der eine erste Kulissenführung zur Absenkung der Klappe an einem Steuerschlitten angeordnet ist, welcher selbst entlang einer fahrzeugfesten Führungsbahn linear beweglich ist.

Diese bekannte Verlagerungsmechanik ist konstruktiv aufwendig, weist eine hohe Bauteilanzahl auf und erfordert einen hohen Montageaufwand.

Die DE 44 40 814 A1 offenbart eine Tankklappe, die von einer Schließstellung in eine unterhalb der Fahrzeugkarosserie verbrachte Offenstellung überführbar ist. Hierzu sind an der Tankklappe angeordnete Führungselemente mit Führungsbolzen vorgesehen, die jeweils in einer Führungsbahn mit einem geraden und mit einem gekrümmten Führungsabschnitt aufgenommen sind. Der gekrümmte Führungsabschnitt sorgt für eine Hubbewegung, während der gerade Führungsabschnitt eine Verschiebebewegung bewirkt. Die Verstellbewegung wird beispielsweise über eine Stange, welche mit einem Übertragungsteil gekoppelt ist, und über einen zwischen dem Übertragungsteil und dem Führungselement angeordneten Koppelhebel auf die Tankklappe übertragen.

Diese Lösung ist aufgrund der linearen Verstellbewegung der Stange durch einen unerwünscht hohen Bauraumbedarf gekennzeichnet.

Aus der Praxis bekannte und bauraumgünstiger ausgeführte Verlagerungsmechanismen für Tankklappen und dergleichen nutzen oftmals sogenannte Steigekabel bzw. Zug-Druck-Seile, um die Tankklappe zwischen ihrem die Tanköffnung verschließenden Betriebszustand und ihrem die Tankmulde freigebenden Betriebszustand zu verlagern.

Eine Verschlussvorrichtung zum Verschließen einer Zugriffsöffnung in einer Kraftfahrzeugkarosserie mit einem Zug-Druck-Seil ist beispielsweise in der DE 10 2016 110 869 A1 beschrieben.

Bei Lösungen mit Steigekabeln bzw. mit Zug-Druck-Seilen ist es jedoch problematisch, wenn sich derartige Verlagerungsmechaniken auch im Nassbereich eines Fahrzeuges befinden. Dann ist ein unerwünscht hoher Dichtaufwand erforderlich, um ein Verschmutzen und/oder Vereisen der Steigekabel bzw. der Zug-Druck-Seile zu vermeiden. Zusätzlich werden Steigekabel beflockt, um Betriebsgeräusche zu reduzieren, die eine Qualitätsanmutung beeinträchtigen. Beflockte Steigekabel erfordern jedoch erhöhte Kräfte und Drehmomente, um die Steigekabel gegenüber gehäusefesten Führungen zu verschieben.

Es ist eine bevorzugte Aufgabe der erfindungsgemäßen Technologie, zumindest einen Nachteil von einer vorbekannten Lösung zu verringern oder zu beheben oder eine alternative Lösung vorzuschlagen. Es ist insbesondere eine bevorzugte Aufgabe der hier offenbarten Technologie, eine Abdeckvorrichtung, insbesondere eine Ladeklappenvorrichtung zum Verschließen und Öffnen einer Ladeöffnung in einer Fahrzeugkarosserie eines Fahrzeuges mit elektrischem Antrieb, mit einer Deckelkomponente und einem Verlagerungsmechanismus für die Deckelkomponente zur Verfügung zu stellen, die hinsichtlich mindestens eines der folgenden Faktoren verbessert ist: Herstellungskosten, Komplexität der Herstellung, Montageaufwand, Bauraumausnutzung, Betriebssicherheit, Nachhaltigkeit, Bauteilzuverlässigkeit und Widerstandsfähigkeit gegenüber Umwelteinflüssen. Weitere bevorzugte Aufgaben bestehen darin, einen Betrieb mit geringen Betätigungskräften und Antriebsmomenten sowie mit geringen Betriebsgeräuschen zu ermöglichen.

Die Aufgabe(n) wird/werden gelöst mit einer Abdeckvorrichtung mit den Merkmalen des Patentanspruches 1. Die abhängigen Patentansprüche stellen bevorzugte Ausgestaltungen dar.

Die erfindungsgemäße Abdeckvorrichtung umfasst eine Deckelkomponente zum Verschließen und Freigeben einer Öffnung in einer Fahrzeugkarosserie, wobei die Öffnung ein Durchgang einer Fahrzeugkarosserie in eine innerhalb der Fahrzeugkarosserie ausgebildete Lade- oder Tankmulde sein kann. Dabei kann die Deckelkomponente beispielsweise als Ladeklappe für Fahrzeuge mit einem elektrischen Antrieb ausgeführt sein, jedoch ist auch prinzipiell eine Ausführung als eine Tankklappe für Fahrzeuge mit einer Brennkraftmaschine denkbar.

Die erfindungsgemäße Abdeckvorrichtung verfügt über einen Verlagerungsmechanismus für die Deckelkomponente zum Verschließen und Freigeben der Öffnung in der Fahrzeugkarosserie, wobei die Deckelkomponente unter den angrenzenden Bereich der Fahrzeugkarosserie verlagerbar bzw. absenkbar ist. Teil des Verlagerungsmechanismus ist ein Kulissenführungssystem, über das die Deckelkomponente zwischen einer die Öffnung verschließenden Stellung und einer die Öffnung freigebenden Stellung verstellbar geführt ist.

Erfindungsgemäß ist zumindest ein um eine vorzugsweise stationäre Drehachse verschwenkbares Steuerelement vorgesehen, das in Koppelbereichen drehbar mit wenigstens zwei Steuerhebeln in Wirkverbindung steht. Die Koppelbereiche sind von der Drehachse und auch zueinander beabstandet. Zusätzlich verbinden Koppelelemente die Steuerhebel mit der Deckelkomponente drehbar und greifen jeweils in eine karosseriefeste Steuerbahn des Kulissenführungssystem ein. Die Steuerhebel werden während einer Verschwenkung des Steuerelements in Richtung einer Position, die der freigebenden Stellung der Deckelelemente entspricht, und während einer weiteren Verschwenkung des Steuerelements in Richtung einer Position, die der verschließenden Stellung der Deckelkomponente entspricht, entlang der Steuerbahnen verstellt. Dabei betätigen die Steuerhebel jeweils die Deckelkomponente in Öffnungsrichtung oder in Schließrichtung der Öffnung.

Die erfindungsgemäße Abdeckvorrichtung ist konstruktiv einfach sowie mit einer geringen Bauteilanzahl ausgeführt und weist zudem einen geringen Bauraumbedarf auf. Die Deckelkomponente der erfindungsgemäßen Abdeckvorrichtung erfährt bei der Öffnung und Schließung insgesamt eine harmonische Bewegung, wobei, insbesondere im Vergleich zu Lösungen einem Antrieb über Steigekabel oder Zug-Druck-Seile, das Steuerelement mit geringeren Antriebskräften und Antriebsmomenten bei gleichzeitig geringen Betriebsgeräuschen verstellbar ist. Zudem ist es mit geringem konstruktivem Aufwand gegen von außen am Deckelelement in Öffnungsrichtung angreifenden Stellkräfte in Schließstellu Die vertikale Hubbewegung der Deckelkomponente kann im

Die Bewegung der Deckelkomponente kann mit dem Kulissenführungssystem bei einer Öffnung der Deckelkomponente zunächst im Wesentlichen normal zur Öffnungsebene der Fahrzeugkarosserie erfolgen. Die sich daran anschließende Verstellung der Deckelkomponente in die die Öffnung freigebende Stellung kann insgesamt eine Verschwenkung der Deckelkomponente um die Drehachse des Steuerelementes abbilden.

Weiterhin vorteilhaft ist, dass die Verlagerungsmechanik mit einem schwenkbaren Steuerelement ohne aufwendige Dichtmaßnahmen auch im Nassbereich eines Fahrzeuges eingesetzt werden kann.

Das Kulissenführungssystem weist zweckmäßigerweise Steuerbahnen auf, die dazu eingerichtet sind, die Deckelkomponente während einer Schwenkbewegung des schwenkbaren Steuerelements in definiertem Umfang zu verstellen. So besteht die Möglichkeit, dass die Deckelkomponente während einer Schwenkbewegung des Steuerelements ausgehend von einer ersten Schwenkstellung, die das Steuerelement im verschließenden Betriebszustand der Deckelkomponente aufweist, in Richtung einer zweiten Schwenkstellung, die das erste Steuerelement im öffnungsfreigebenden Betriebszustand der Deckelkomponente aufweist, zuerst im Wesentlichen vertikal bzw. normal aus einer Anlageposition an den angrenzenden Bereich der Fahrzeugkarosserie in Form einer Hubbewegung hiervon weg in Richtung des Fahrzeuginneren verstellt wird. Anschließend an diese Absenkbewegung kann die Deckelkomponente im Wesentlichen unter den angrenzenden Bereich der Fahrzeugkarosserie in einem die Öffnung freigebenden Umfang weiter verfahren werden.

Letztgenannte Verstellung der Deckelkomponente innerhalb der Fahrzeugkarosserie kann beispielsweise in Fahrzeughochrichtung nach oben, nach unten, in Fahrzeuglängsrichtung nach vorne oder nach hinten oder auch in Fahrzeughochrichtung und in Fahrzeuglängsrichtung erfolgen.

Bei einer Ausführungsform der Abdeckvorrichtung, die durch eine geringe Bauteilanzahl gekennzeichnet ist, sind die Steuerbahnen des Kulissenführungssystems vorzugsweise in Form karosseriefester langlochartiger Lochbahnen vorgesehen.

Um die erfindungsgemäße Abdeckvorrichtung mit möglichst geringem Aufwand montieren zu können, stehen die Koppelelemente in Abhängigkeit des jeweils vorliegenden Anwendungsfalles fest mit der Deckelkomponente oder fest mit den Steuerhebeln in Verbindung und sind drehbar mit der Deckelkomponente oder drehbar mit den Steuerhebeln verbunden und werden während einer Schwenkbewegung der Steuerhebel in den Steuerbahnen bewegt.

Damit bei einer Verschwenkung des Steuerelements von seiner ersten Schwenkstellung in Richtung seiner zweiten Schwenkstellung zunächst die Absenkbewegung bzw. normale Hubbewegung der Deckelkomponente erfolgt, können sich jeweils erste Abschnitte der Steuerbahnen im Wesentlichen in Richtung der Hubbewegung der Deckelkomponente von der Öffnung weg erstrecken.

Bei einer weiteren vorteilhaften Ausführungsform der erfindungsgemäßen Abdeckvorrichtung schließen sich an die ersten Abschnitte der Steuerbahnen jeweils zweite Abschnitte der Steuerbahnen an. Die Verläufe der zweiten Abschnitte sind jeweils winkelig zu den Verläufen der ersten Abschnitte der Steuerbahnen verlaufend ausgerichtet. Dadurch wird auf einfache Art und Weise erreicht, dass aus einer Schwenkbewegung des Steuerelements in Richtung seiner zweiten Schwenkstellung die sich an die Hubbewegung anschließende Stellbewegung der Deckelkomponente unter den angrenzenden Bereich der Fahrzeugkarosserie resultiert.

Das bedeutet, dass die Ausrichtung der Abschnitte der Steuerbahnen zueinander so ist, dass aus einer fortgesetzten Schwenkbewegung des Steuerelements die Stellbewegung bzw. Schwenkbewegung der Deckelkomponente unter den angrenzenden Bereich der Fahrzeugkarosserie resultiert.

Bei einer Ausführungsform der erfindungsgemäßen Abdeckvorrichtung, die durch eine geringe Teileanzahl gekennzeichnet ist, umfasst das Steuerelement einen ersten Steuerhebelabschnitt und einen zweiten Steuerhebelabschnitt, die endseitig fest miteinander verbunden sind und vorzugsweise einen spitzen oder einen stumpfen Winkel miteinander einschließen.

Das Steuerelement kann beispielsweise wenigstens annähernd L-förmig ausgeführt sein.

Die Drehachse des Steuerelementes verläuft bei einer bauraumgünstigen Ausführungsform der erfindungsgemäßen Abdeckvorrichtung durch ein freies Ende des ersten Steuerhebelabschnittes. Zusätzlich kann bei dieser Ausführungsform der Abdeckvorrichtung der zweite Steuerhebelabschnitt des Steuerelementes im Bereich seines freien Endes mit einem der Steuerhebel drehbar verbunden sein.

Zudem kann das Steuerelement im Verbindungsbereich der Steuerhebelabschnitte mit einem der Steuerhebel drehbar verbunden sein, um den Schwenkantrieb über die Steuerhebel auf konstruktiv einfache Art und Weise auf die Deckelkomponente zu übertragen.

Die Wirkverbindung zwischen der Drehachse und der Deckelkomponente über das Steuerelement und die Steuerhebel kann so ausgeführt sein, dass die Drehachse und Rotationsachsen der Steuerhebel, um die die Steuerhebel jeweils gegenüber den Steuerhebelabschnitten des Steuerelementes rotieren, und Rotationsachsen der Steuerhebel, um die die Steuerhebel gegenüber dem Deckelelement rotieren, in der Schließlage der Deckelkomponente jeweils wenigstens annähernd auf einer geraden Linie bzw. Kraftwirkungslinie liegen.

Dadurch wird erreicht, dass die Steuerhebel und die damit drehbar verbundenen Steuerhebelabschnitte des Steuerelementes in der Schließlage der Deckelkomponente sich zueinander in einer sogenannten Strecklage befinden. Damit ist die Deckelkomponente in der geschlossenen Position durch die gleichzeitige Strecklage des oberen und des unteren Steuerhebels bzw. Führungslenkers in Bezug zum Steuerelement bzw. Antriebslenker gegen Einflüsse von außen gesichert. Derartige äußere Einflüsse stellen beispielsweise unerwünschte manuelle Manipulationen wie manuelles Eindrücken, manuelles Verschieben, aber auch z. B. Krafteinwirkungen durch die Luftumströmung der Fahrzeugkarosserie während einer Fahrt und dergleichen dar.

Zusätzlich wird durch die gleichzeitige Strecklage der Steuerhebel und des Steuerelementes am Deckelelement die Deckelkomponente eine Schließkraft angelegt und das Deckelelement in Anlage mit einer optionalen Dichteinheit gehalten. Somit wird mit geringem Aufwand gewährleistet, dass die Deckelkomponente in geschlossenem Zustand der Öffnung den Innenraum der Fahrzeugkarosserie gegen den Eintritt von Schmutz und Feuchtigkeit abdichtet.

Die Koppelelemente können als zylindrische Bolzen ausgeführt sein, deren Längsachsen den Rotationsachsen der Steuerhebel gegenüber der Deckelkomponente entsprechen. Die Deckelkomponente ist somit auf konstruktiv einfache Art und Weise mit gleichzeitig geringen Stellkräften verstellbar, da lediglich Reibkräfte im Anlagebereiche zwischen den Koppelelementen und der Deckelkomponente oder zwischen den Koppelelementen und den Steuerhebeln in diesem Bereich der Wirkverbindung zu überwinden sind.

Zumindest eines der Koppelelemente kann in eine weitere Steuerbahn eingreifen, die im Bereich der Deckelkomponente oder im Bereich des damit verbundenen Steuerhebels vorgesehen ist und vorzugsweise als langlochartige Lochbahn ausgeführt ist. Damit sind auf einfache Art und Weise Fertigungstoleranzen ausgleichbar und unerwünschtes Klemmen im Bereich des Verlagerungsmechanismus vermeidbar.

Der eine Steuerhebel kann zwischen der Steuerbahn und dem Deckelelement angeordnet sein und über eines der Koppelelemente mit diesen in Wirkverbindung stehen. Zusätzlich steht die Deckelkomponente dann mit dem anderen Steuerhebel und der Steuerbahn über ein weiteres Koppelelement in einem Bereich in Verbindung, der zwischen der Steuerbahn und dem Steuerhebel angeordnet ist. Dadurch sind das Steuerelement, die Steuerhebel und die Steuerbahnen in konstruktiv einfacher Art und Weise zumindest bereichsweise in zueinander parallelen Kinematikebenen anordenbar bzw. verschwenkbar und die erfindungsgemäße Abdeckvorrichtung kompakt ausführbar.

Die Drehachse des Steuerelementes kann in Abhängigkeit des jeweils vorliegenden Anwendungsfalles in Fahrzeughochrichtung oder in Fahrzeuglängsrichtung verlaufen, um vorhandene Bauräume innerhalb der Fahrzeugkarosserie auf einfache Art und Weise zu nutzen und die Abdeckvorrichtung mit geringem konstruktiven Aufwand in bestehende Fahrzeugsysteme integrieren zu können.

Die Abdeckvorrichtung kann in einem geschlossenen Abschnitt der Fahrzeugkarosserie angeordnet sein, der in einem unteren Bereich mit einem Wasserablauf ausgeführt ist, um unerwünschte Wasseransammlungen im Inneren der Fahrzeugkarosserie zu vermeiden.

Des Weiteren kann auch eine Sensoreinrichtung vorgesehen sein, über die eine aktuelle Lage bzw. Position des Deckelelementes ermittelbar ist.

Weitere Vorteile und vorteilhafte Ausführungsformen der Erfindung ergeben sich aus den Ansprüchen und den nachfolgend unter Bezugnahme auf die Zeichnungen prinzipmäßig beschriebenen Ausführungsbeispielen, wobei für bau- und/oder funktionsgleiche Bauteile die gleichen Bezugszeichen verwendet werden.

Es zeigt:
- Fig. 1: eine vereinfachte dreidimensionale Ansicht eines Fahrzeuges mit einer Abdeckvorrichtung, die eine Deckelkomponente zum Verschließen und Freigeben einer Öffnung einer Fahrzeugkarosserie des Fahrzeuges aufweist;
- Fig. 2: einen in Fig. 1 näher gekennzeichneten Bereich II in einer Seitenansicht und in einem Betriebszustand der Abdeckvorrichtung, in der die Deckelkomponente die Öffnung der Fahrzeugkarosserie verschließt;
- Fig. 3: eine Fig. 2 entsprechende Darstellung der Abdeckvorrichtung in teilweise geöffnetem Zustand der Öffnung;
- Fig. 4: die Abdeckvorrichtung in einer Fig. 2 entsprechenden Darstellung in einem Betriebszustand der Abdeckvorrichtung, in den die Deckelkomponente die Öffnung vollständig freigibt;
- Fig. 5: die Abdeckvorrichtung gemäß Fig. 2 in einer Seitenansicht;
- Fig. 6: die Abdeckvorrichtung gemäß Fig. 2 in einer Ansicht von oben;
- Fig. 7: die Abdeckvorrichtung gemäß Fig. 2 in einer Rückansicht;
- Fig. 8: die Abdeckvorrichtung gemäß Fig. 2 in einer dreidimensionalen Rückansicht;
- Fig. 9: die Abdeckvorrichtung gemäß Fig. 2 in einer Querschnittansicht bei geschlossener Öffnung;
- Fig. 10: eine Fig. 9 entsprechende Darstellung der Abdeckvorrichtung bei teilweise freigegebener Öffnung; und
- Fig. 11: eine Fig. 9 entsprechende Darstellung der Abdeckvorrichtung bei vollständig freigegebener Öffnung.

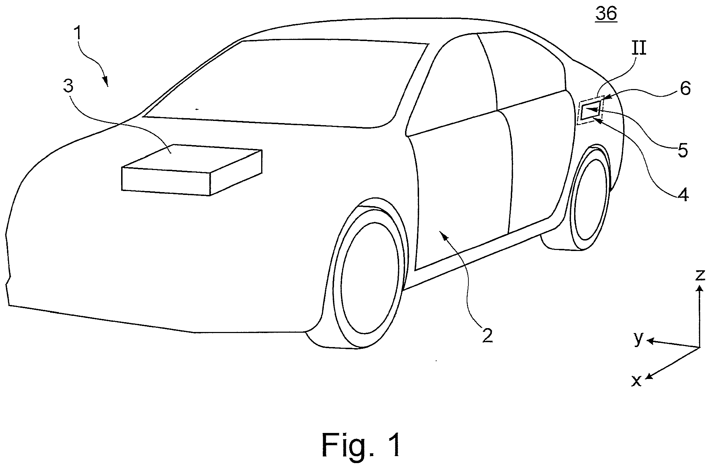

Bezug nehmend auf Fig. 1 ist ein Fahrzeug 1 mit einer Fahrzeugkarosserie 2 und einer Antriebseinrichtung 3, gezeigt, wobei die Antriebseinrichtung eine Brennkraftmaschine, wenigstens eine elektrische Maschine oder auch eine Kombination aus wenigstens einer Brennkraftmaschine und wenigstens einer elektrischen Maschine umfassen kann.

Vorliegend weist das Fahrzeug 1 heckseitig eine Abdeckvorrichtung 4 mit einer Deckelkomponente 5 auf, die zum Verschließen und Freigeben einer Öffnung 6 in der Fahrzeugkarosserie 2 vorgesehen ist. Die Öffnung 6 kann eine Tank- und/oder Lademulde sein. Durch die Öffnung 6 kann ein elektrisches Steckersystem mit einem entsprechenden Koppelelement, das innerhalb der Fahrzeugkarosserie bzw. unterhalb der Außenhaut des Fahrzeuges 1 angeordnet ist, in Wirkverbindung bringbar ist, um einen elektrischen Energiespeicher des Fahrzeuges 1 aufladen zu können. Die Deckelkomponente 5 stellt dann entweder eine sogenannte Ladeklappe dar, die im Wesentlichen als ein ebenes bzw. plattenartiges Element ausgeführt ist.

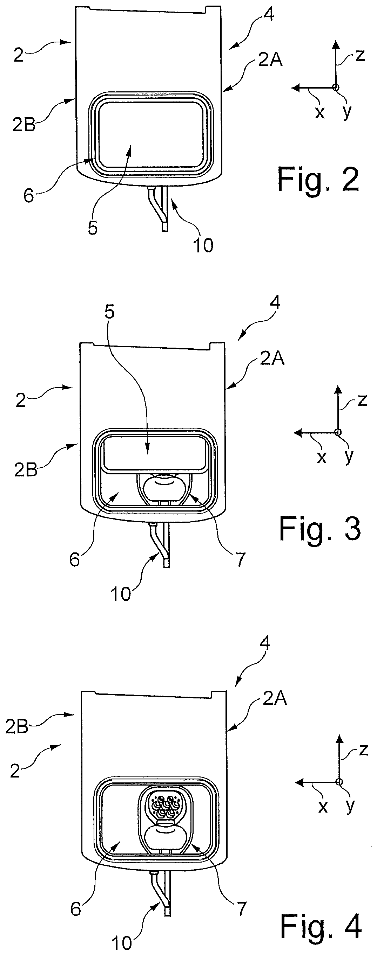

Bezug nehmend auf Fig. 2 ist ein in Fig. 1 näher gekennzeichneten Bereich II gezeigt, der die Abdeckvorrichtung 4 umfasst. Dabei ist die Abdeckvorrichtung 4 in Fig. 2 in einem Betriebszustand dargestellt, in dem die Öffnung 6 vollständig von der Deckelkomponente 5 verschlossen ist. Zusätzlich zeigt Fig. 3 eine Fig. 2 entsprechende Darstellung der Abdeckvorrichtung 4 in einem Betriebszustand, in dem die Öffnung 6 teilweise von der Deckelkomponente 5 freigegeben ist und in dem die Deckelkomponente 5 teilweise in Fahrzeughochrichtung z innerhalb der Fahrzeugkarosserie 2 nach oben verschwenkt ist. In dem in Fig. 4 gezeigten Betriebszustand der Abdeckvorrichtung 4 ist die Öffnung 6 von der Deckelkomponente 5 freigegeben.

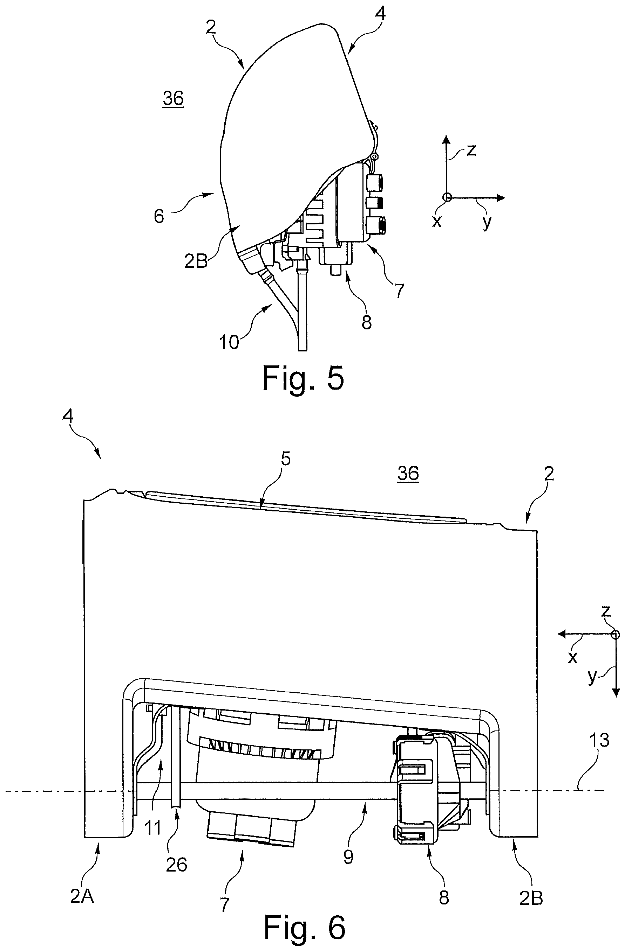

Fig. 5 zeigt die Abdeckvorrichtung 4 in einer Seitenansicht, in der ein Ladestecker 7 und die Antriebseinheit 8 dargestellt sind. Ein Elektromotor der Antriebseinheit 8 ist in nicht dargestellter Art und Weise beispielsweise über eine Kegelradverzahnung oder dergleichen mit einer in Fig. 6 näher ersichtlichen Antriebswelle 9 wirkverbunden. Alternativ besteht auch die Möglichkeit, dass die Antriebseinheit hydraulisch angetrieben wird. Zusätzlich umfasst die Abdeckvorrichtung 4 einen Wasserablauf 10, über den Wasser oder auch andere Fluide in Fahrzeughochrichtung z nach unten aus dem Inneren der Abdeckvorrichtung 4 an die Umgebung 36 des Fahrzeuges 1 in definierter Art und Weise abführbar sind.

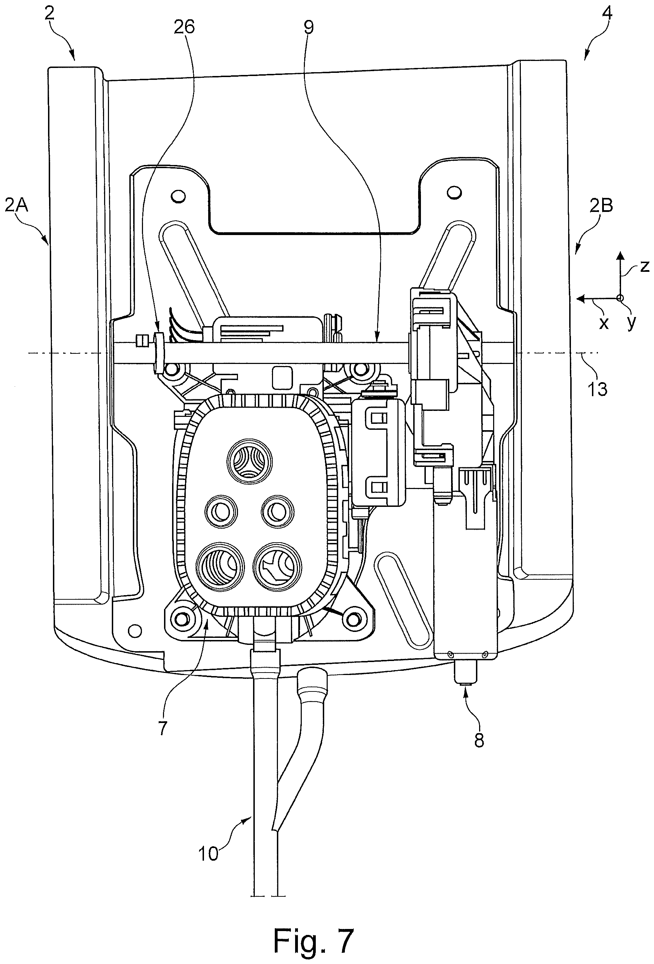

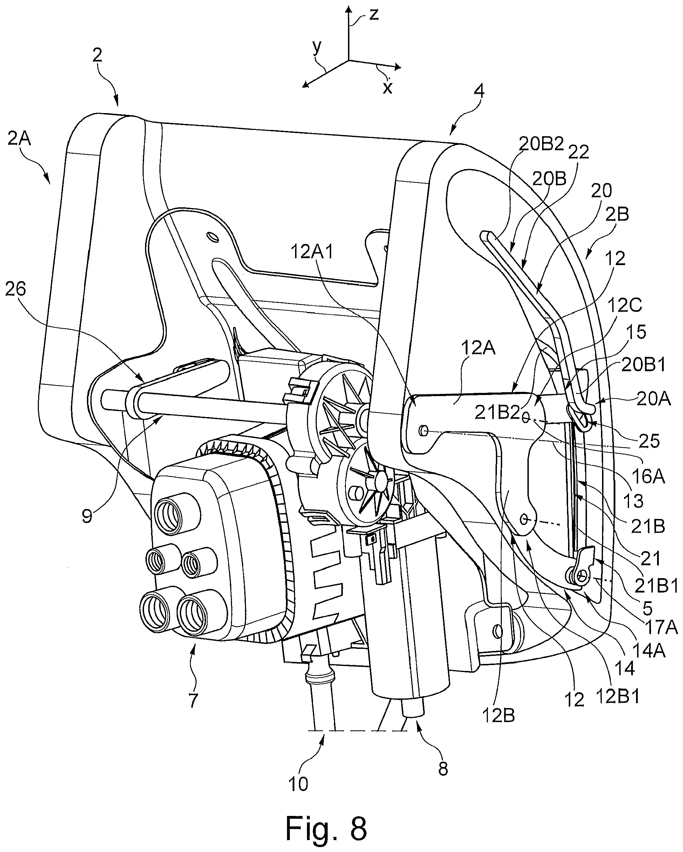

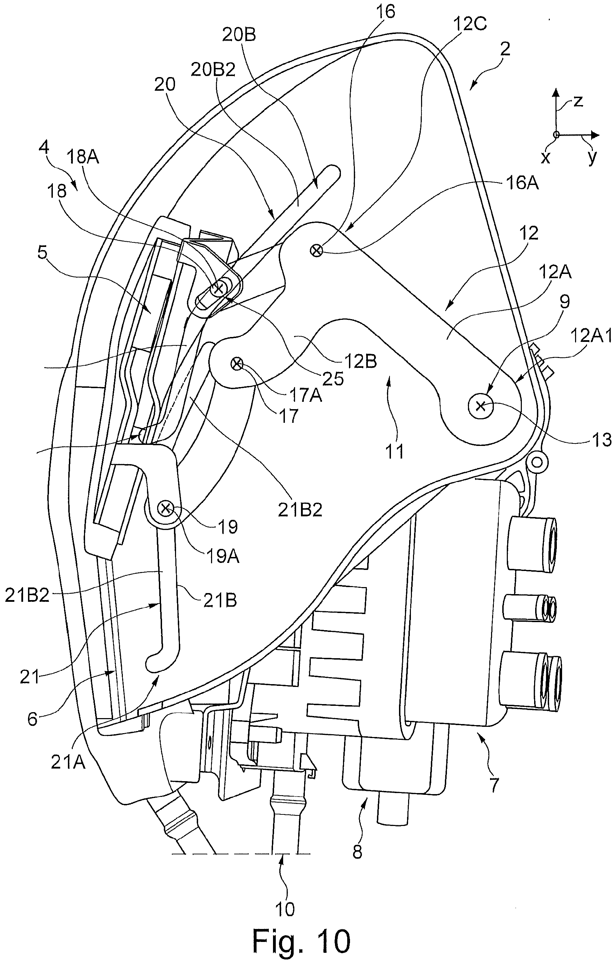

Zusätzlich ist in Fig. 7 eine Rückansicht der Abdeckvorrichtung 4 dargestellt. Aus den Darstellungen gemäß Fig. 6 und Fig. 7 geht hervor, dass sich die Antriebswelle 9 in Fahrzeuglängsrichtung x zwischen zwei seitlichen Karosseriebereichen 2A und 2B erstreckt, in den jeweils Teile eines in Fig. 8 bis Fig. 11 näher dargestellten Verlagerungsmechanismus 11 angeordnet sind.

Der Verlagerungsmechanismus 11 umfasst zwei Steuerelemente 12, die jeweils endseitig mit der Antriebswelle 9 drehfest verbunden sind und gemeinsam mit der Antriebswelle 9 um eine karosseriefeste Drehachse 13 von der Antriebseinheit 8 in der nachfolgend näher beschriebenen Art und Weise verschwenkbar bzw. verdrehbar sind. In Fig. 8 bis Fig. 11 ist jeweils nur das Steuerelement 12 dargestellt, das nachfolgend auch als Antriebslenker bezeichnet wird. Der Antriebslenker 12 ist innerhalb des Karosseriebereiches 2B angeordnet. Der Verlagerungsmechanismus 11 ist innerhalb des Karosseriebereiches 2A im gleichen Umfang wie im Karosseriebereich 2B konstruktiv ausgeführt, auf den in der nachfolgenden Beschreibung zu Fig. 8 bis Fig. 11 näher Bezug genommen wird.

Der Antriebslenker 12 ist im Wesentlichen L-förmig ausgeführt und umfasst zwei Steuerhebelabschnitte 12A und 12B, die endseitig fest miteinander verbunden sind und bei dem in der Zeichnung näher dargestellten Ausführungsbeispiel im Wesentlichen einen rechten Winkel miteinander einschließen. Selbstverständlich liegt es im Ermessen des Fachmannes den Winkel zwischen den beiden Steuerhebelabschnitten 12A und 12B in Abhängigkeit des jeweils vorliegenden Anwendungsfalles als spitzen Winkel oder als stumpfen Winkel vorzusehen, um die Deckelkomponente 5 in gewünschtem Umfang verstellen zu können.

Die Drehachse 13 verläuft durch ein freies Ende 12A1 des ersten Steuerhebelabschnittes 12A des Antrieblenkers 12. Der zweite Steuerhebelabschnitt 12B ist im Bereich seines freien Endes 12B1, welches einen Koppelbereich bildet, drehbar mit einem Steuerhebel 14 verbunden, der in einem dem freien Ende 12B1 des Antriebslenkers 12 abgewandten Endbereich 14A drehbar mit der Deckelkomponente 5 in Wirkverbindung steht.

Zusätzlich ist der Antriebslenker 12 in einem Verbindungsbereich 12C der Steuerhebelabschnitte 12A und 12B, welcher zugleich einen Koppelbereich bildet, drehbar mit einem weiteren Steuerhebel 15 verbunden, der wiederum mit einem dem Antriebslenker 12 abgewandten Endbereich 15A drehbar mit der Deckelkomponente 5 in Wirkverbindung steht. Der Antriebslenker 12 und die Hebelelemente bzw. Steuerhebel 14 und 15, die nachfolgend auch als Führungslenker bezeichnet werden, sind über bolzenartige Koppelelemente 16, 17 drehbar miteinander verbunden. Zusätzlich sind die Führungslenker 14, 15 über damit feste verbundene weitere Koppelelemente 18, 19 drehbar mit der Deckelkomponente 5 wirkverbunden. Die Koppelelemente 18 und 19 greifen zusätzlich in Steuerbahnen 20, 21 eines Kulissenführungssystems 22 der Abdeckvorrichtung 4 ein und werden während Schwenkbewegungen des Antriebslenkers 12 und der Steuerhebel 14, 15 um die Drehachse 13 entlang der Steuerbahnen 20 und 21 verfahren.

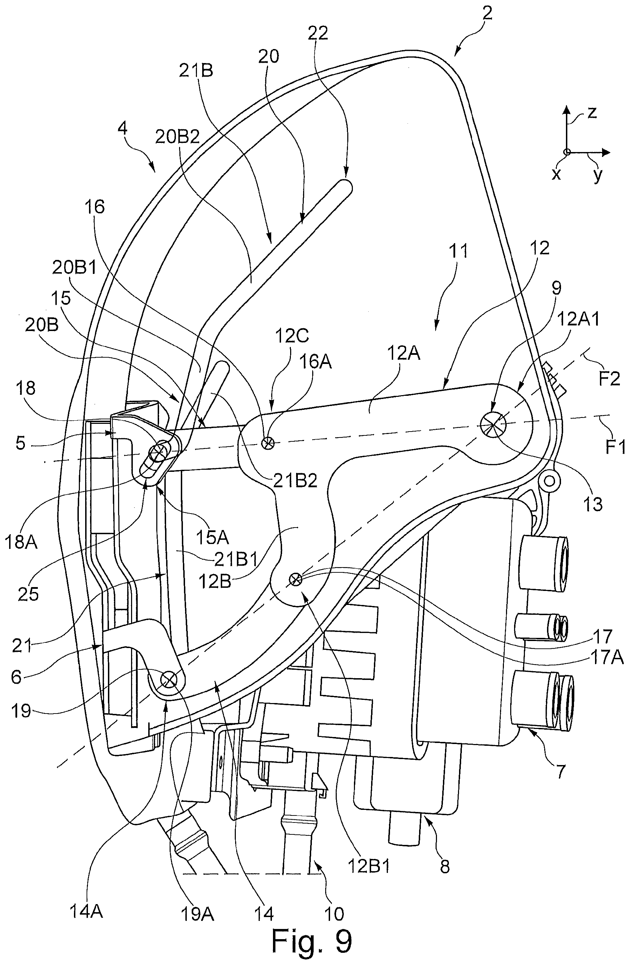

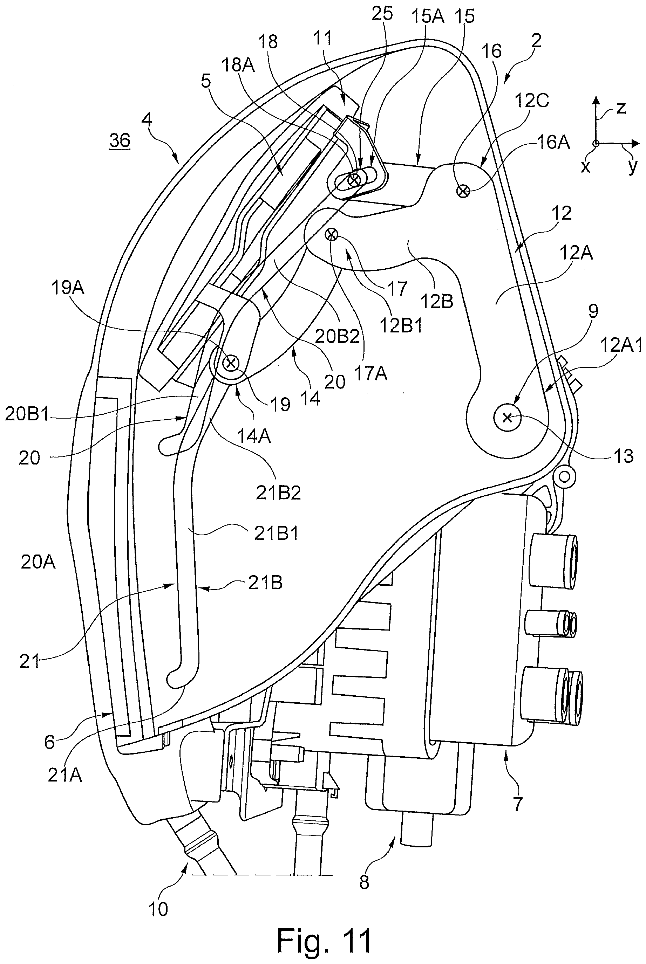

Die Steuerbahnen 20 und 21 weisen jeweils einen ersten Abschnitt 20A, 21A auf, die winkelig zu weiteren Abschnitten 20B, 21B angeordnet sind. Darüber hinaus sind die Steuerbahnen 20, 21 des Kulissenführungssystems 22 in Form karosseriefester langlochartiger Lochbahnen vorgesehen und dazu eingerichtet, die Deckelkomponente 5 während einer Schwenkbewegung des Antriebslenkers 12 ausgehend von seiner Position, die der schließenden Stellung der Deckelkomponente entspricht und in Fig. 9 dargestellt ist, in Richtung seiner Position, die der freigebenden Stellung der Deckelkomponente 5 entspricht und die in Fig. 11 gezeigt ist, zuerst in Richtung Fahrzeuginneres aus seiner Anlageposition an der Fahrzeugkarosserie 2 abzusenken und anschließend unter den angrenzenden Bereich der Fahrzeugkarosserie 2 zu verlagern. Hierfür verlaufen die zweiten Abschnitte 20B und 21B der Steuerbahnen 20 und 21 jeweils annähernd parallel zu der Außenseite der Fahrzeugkarosserie 2 und weisen jeweils zwei Unterabschnitte 20B1, 20B2 bzw. 21B1, 21B2 auf. Die Unterabschnitte 20B1, 20B2 bzw. 21B1, 21B2 weisen wiederum einen geraden Verlauf auf und schließen einen stumpfen Winkel miteinander ein.

In Abhängigkeit des jeweils vorliegenden Anwendungsfalles besteht auch die Möglichkeit, dass die zweiten Abschnitte der Steuerbahnen jeweils gekrümmt ausgeführt sind. Dabei kann die Krümmung der zweiten Abschnitte der Steuerbahnen der Krümmung der Außenseite der Fahrzeugkarosserie 2 entsprechen.

Zur Darstellung der Hubbewegung der Deckelkomponente 5 in Fahrzeugquerrichtung y erstrecken sich die ersten Abschnitte 20A, 21A der Steuerbahnen 20, 21 im Wesentlichen in Richtung der Hubbewegung der Deckelkomponente 5 von der Öffnung 6 weg in Richtung Karosserieinneres. Die sich an die ersten Abschnitte 20A, 21A der Steuerbahnen 20, 21 jeweils anschließenden zweiten Abschnitte 20B, 21B verlaufen jeweils winkelig zu den Verläufen der ersten Abschnitte 20A, 21A. Dadurch wird gewährleistet, dass aus einer Schwenkbewegung des Steuerelements 12 in Richtung seiner zweiten Schwenkstellung die sich an die Hubbewegung der Deckelkomponente 5 anschließende Stellbewegung der Deckelkomponente 5 unter den angrenzenden Bereich der Fahrzeugkarosserie 2 resultiert.

In dem in Fig. 9 dargestellten Betriebszustand der Abdeckvorrichtung 4 befinden sich der Antriebslenker 12 und die beiden Führungslenker 14, 15 jeweils in einer sogenannten Strecklage. Diese Strecklage ermöglicht auf einfache Art und Weise ein sicheres Halten der Deckelkomponente 5 in seiner die Öffnung 6 verschließenden Position. Die Deckelkomponente 5 ist in Strecklage des Verlagerungsmechanismus 11 gegen eine ungewollte Hubbewegung der Koppelelemente 18 und 19 entlang der ersten Abschnitte 20A, 21A der Steuerbahnen 20, 21 dadurch gesichert, dass an der Deckelkomponente 5 in Fahrzeugquerrichtung angreifende Kräfte entlang der Kraftwirkungslinien F1 und F2 im Bereich der Antriebsachse bzw. der Drehachse 13 abgestützt werden, ohne dem Antriebslenker oder den Führungslenkern 14, 15 einen in Öffnungsrichtung wirkendes Drehmoment aufzuprägen. Dies wird dadurch erreicht, dass Rotationsachsen 16A, 18A der Koppelelemente 16, 18 und die Drehachse 13 auf der geraden Kraftwirkungslinie F1 und Rotationsachsen 17A, 19A der Koppelelemente 17, 19 und die Drehachse 13 auf der geraden Kraftwirkungslinie F2 liegen.

Zusätzlich besteht auch die Möglichkeit, dass der Verlagerungsmechanismus 11 in geschlossenem Zustand der Öffnung 6 eine doppelte Übertotpunktlage aufweist, um ein ungewünschtes Öffnen der Öffnung 6 auf konstruktiv einfache Art und Weise zu vermeiden. In einem solchen Betriebszustand des Verlagerungsmechanismus 11 liegen die Rotationsachsen 16A und 17A jeweils in Fahrzeughochrichtung z unterhalb der Kraftwirkungslinien F1 und F2, womit die Deckelkomponente 5 erst dann von der Fahrzeugkarosserie 2 nach innen abhebt, wenn der Antriebslenker 12 eine entsprechende Schwenkbewegung ausführt. Eine solche Schwenkbewegung des Antriebslenkers 12 ist jedoch dem Antriebslenker 12 durch eine von außen auf die Deckelkomponente 5 wirkende Druckkraft nicht aufprägbar, womit die Deckelkomponente 5 auch in in den Übertotpunktlagen der Rotationsachsen 16A, 17A in gewünschtem Umfang gegen unbeabsichtigtes Öffnen gesichert ist.

Das Koppelelement 18 greift vorliegend in eine weitere Steuerbahn 25 ein, die im Bereich der Deckelkomponente 5 vorgesehen ist und als langlochartige Lochbahn ausgeführt ist. Über die weitere Steuerbahn 25 besteht die Möglichkeit, dass das Koppelelement 18 während der Öffnungs- oder Schließbewegung der Deckelkomponente 5 in Bezug auf die Deckelkomponente 5 sowohl rotatorisch als auch translatorisch gegenüber der Deckelkomponente 5 bewegbar ist. Dadurch sind auf einfache Art und Weise Fertigungstoleranzen im Bereich der einzelnen Bauteile der Abdeckvorrichtung 4 mit konstruktiv geringem Aufwand kompensierbar und das Auftreten unerwünschter Klemmkräfte, die der Bewegung der Deckelkomponente 5 entgegenwirken, verhindert.

Zusätzlich ist die Abdeckvorrichtung 4 mit einer Sensoreinrichtung 26 ausgeführt, über die jeweils eine aktuelle Position der Deckelkomponente 5 ermittelbar ist.

### BEZUGSZEICHENLISTE

- 1: Fahrzeug
- 2: Fahrzeugkarosserie
- 2A, 2B: Karosseriebereich
- 3: Antriebseinrichtung
- 4: Abdeckvorrichtung
- 5: Deckelkomponente
- 6: Öffnung
- 7: Ladestecker
- 8: Antriebseinheit
- 9: Antriebswelle
- 10: Wasserablauf
- 11: Verlagerungsmechanismus
- 12: Steuerelement, Antriebslenker
- 12A: erster Steuerhebelabschnitt
- 12A1: freies Ende des ersten Steuerhebelabschnittes 12A
- 12B: zweiter Steuerhebelabschnitt
- 12B1: freies Ende des zweiten Steuerhebelabschnittes 12B
- 12C: Verbindungsbereich der Steuerhebelabschnitte
- 13: Drehachse, Antriebsachse
- 14: Steuerhebel, Führungslenker
- 14A: freies Ende des ersten Steuerhebels 14
- 15: Steuerhebel, Führungslenker
- 15A: freies Ende des zweiten Steuerhebels 15
- 16: Koppelelement
- 16A: Rotationsachse des Koppelelementes 16
- 17: Koppelelement
- 17A: Rotationsachse des Koppelelementes 17
- 18: weiteres Koppelelement
- 18A: Rotationsachse des weiteren Koppelelementes 18
- 19: weiteres Koppelelement
- 19A: Rotationsachse des weiteren Koppelelementes 19
- 20: Steuerbahn
- 20A: erster Abschnitt der Steuerbahn 20
- 20B: zweiter Abschnitt der Steuerbahn 20
- 20B1, 20B2: Unterabschnitt des zweiten Abschnittes der Steuerbahn 20
- 21: Steuerbahn
- 21A: erster Abschnitt der Steuerbahn 21
- 21B: zweiter Abschnitt der Steuerbahn 21
- 21B1, 21 B2: Unterabschnitt des zweiten Abschnittes der Steuerbahn 21
- 22: Kulissenführungssystem
- 25: weitere Steuerbahn
- 26: Sensoreinrichtung
- 36: Umgebung
- F1, F2: gerade Kraftwirkungslinie
- x: Fahrzeuglängsrichtung
- y: Fahrzeugquerrichtung
- z: Fahrzeughochrichtung

## Patentansprüche

1. Abdeckvorrichtung (4), insbesondere Ladeklappenvorrichtung, mit einer Deckelkomponente (5) und einem Verlagerungsmechanismus (11) für die Deckelkomponente (5) zum Verschließen und Freigeben einer Öffnung (6) in einer Fahrzeugkarosserie (2), wobei die Deckelkomponente (5) unter einen angrenzenden Bereich der Fahrzeugkarosserie (2) verlagerbar ist, und mit einem Kulissenführungssystem (22), über das die Deckelkomponente (5) zwischen einer die Öffnung (6) verschließenden Stellung und einer die Öffnung (6) freigebenden Stellung verstellbar geführt ist, **dadurch gekennzeichnet,**
**dass** zumindest ein um eine insbesondere stationäre Drehachse (13) verschwenkbares Steuerelement (12) vorgesehen ist, das in Koppelbereichen (12C, 12B1), die von der Drehachse (13) und auch zueinander beabstandet sind, drehbar mit wenigstens zwei Steuerhebeln (14, 15) in Wirkverbindung steht, wobei Koppelelemente (18, 19) vorgesehen sind, welche die Steuerhebel (14, 15) mit der Deckelkomponente (5) drehbar verbinden und jeweils in eine karosseriefeste Steuerbahn (20, 21) des Kulissenführungssystems (22) eingreifen, und wobei die Steuerhebel (14, 15) während einer Verschwenkung des Steuerelements (12) in Richtung einer Position, die der freigebenden Stellung der Deckelkomponente (5) entspricht, und während einer weiteren Verschwenkung des Steuerelements (12) in Richtung einer Position, die der verschließenden Stellung der Deckelkomponente (5) entspricht, entlang der Steuerbahnen (20, 21) verstellt werden und dabei jeweils die Deckelkomponente (5) in Öffnungsrichtung oder in Schließrichtung der Öffnung (6) betätigen.

2. Abdeckvorrichtung nach Anspruch 1,
**dadurch gekennzeichnet, dass** die Steuerbahnen (20, 21) dazu eingerichtet sind, die Deckelkomponente (5) während einer Schwenkbewegung des Steuerelements (12) ausgehend von seiner Position, die der schließenden Stellung der Deckelkomponente (5) entspricht, in Richtung seiner Position, die der freigebenden Stellung der Deckelkomponente (5) entspricht, zuerst in Richtung Fahrzeuginneres vorzugsweise vertikal normal aus einer Anlageposition abzusenken und anschließend unter den angrenzenden Bereich der Fahrzeugkarosserie (2) zu verlagern.

3. Abdeckvorrichtung nach Anspruch 1 oder 2,
**dadurch gekennzeichnet, dass** die Steuerbahnen (20, 21) des Kulissenführungssystems (22) vorzugsweise in Form karosseriefester langlochartiger Lochbahnen vorgesehen sind.

4. Abdeckvorrichtung nach einem der vorhergehenden Ansprüche,
**dadurch gekennzeichnet, dass** die Koppelelemente (18, 19) fest mit der Deckelkomponente (5) oder mit den Steuerhebeln (14, 15) und drehbar mit der Deckelkomponente (5) oder mit den Steuerhebeln (14, 15) verbunden sind und während einer Schwenkbewegung der Steuerhebel (14, 15) in den Steuerbahnen (20, 21) bewegt werden.

5. Abdeckvorrichtung nach einem der vorhergehenden Ansprüche,
**dadurch gekennzeichnet, dass** sich erste Abschnitte (20A, 21A) der Steuerbahnen (20, 21) im Wesentlichen in Richtung der Hubbewegung der Deckelkomponente (5) von der Öffnung (6) weg erstrecken.

6. Abdeckvorrichtung nach einem der vorhergehenden Ansprüche,
**dadurch gekennzeichnet, dass** sich an erste Abschnitte (20A, 21A) der Steuerbahnen (20, 21) jeweils zweite Abschnitte (20B, 21B) der Steuerbahnen (20, 21) anschließen, deren Verläufe jeweils winkelig zu den Verläufen der ersten Abschnitte (20A, 21A) der Steuerbahnen (20, 21) verlaufend ausgerichtet sind, so dass aus einer Schwenkbewegung des Steuerelements (12) in Richtung seiner zweiten Schwenkstellung die sich an die Hubbewegung anschließende Stellbewegung der Deckelkomponente (5) unter den angrenzenden Bereich der Fahrzeugkarosserie (2) resultiert.

7. Abdeckvorrichtung nach einem der vorhergehenden Ansprüche,
**dadurch gekennzeichnet, dass** das Steuerelement (12) einen ersten Steuerhebelabschnitt (12A) und einen zweiten Steuerhebelabschnitt (12B) umfasst, die endseitig fest miteinander verbunden sind und vorzugsweise einen spitzen Winkel miteinander einschließen.

8. Abdeckvorrichtung nach einem der vorhergehenden Ansprüche,
**dadurch gekennzeichnet, dass** die Drehachse (13) durch ein freies Ende (12A1) des ersten Steuerhebelabschnitts (12A) verläuft und der zweite Steuerhebelabschnitt (12B) im Bereich seines freien Endes (12B1) mit einem der Steuerhebel (14) drehbar verbunden ist.

9. Abdeckvorrichtung nach einem der vorhergehenden Ansprüche,
**dadurch gekennzeichnet, dass** das Steuerelement (12) im Verbindungsbereich (12C) der Steuerhebelabschnitte (12A, 12B) mit einem der Steuerhebel (15) drehbar verbunden ist.

10. Abdeckvorrichtung nach einem der vorhergehenden Ansprüche,
**dadurch gekennzeichnet, dass** die Wirkverbindung zwischen der Drehachse (13) und der Deckelkomponente (5) über das Steuerelement (12) und die Steuerhebel (14, 15) so ausgeführt ist, dass die Drehachse (13) und Rotationsachsen (16A, 17A) der Steuerhebel (14, 15), um die die Steuerhebel (14, 15) jeweils gegenüber den Steuerhebelabschnitten (12A, 12B) des Steuerelementes (12) rotieren, und Rotationsachsen (18A, 19A) der Steuerhebel (14, 15), um die die Steuerhebel (14, 15) gegenüber der Deckelkomponente (5) rotieren, in der Schließlage der Deckelkomponente (5) jeweils auf einer geraden Linie (F1, F2) liegen.

11. Abdeckvorrichtung nach einem der vorhergehenden Ansprüche,
**dadurch gekennzeichnet, dass** die Koppelelemente als zylindrische Bolzen ausgeführt sind, deren Längsachsen (57A, 58A) den Rotationsachsen der Steuerhebel gegenüber der Deckelkomponente entsprechen.

12. Abdeckvorrichtung nach einem der vorhergehenden Ansprüche,
**dadurch gekennzeichnet, dass** zumindest eines der Koppelelemente (18) in eine weitere Steuerbahn (25) eingreift, die im Bereich der Deckelkomponente (5) oder im Bereich des damit verbundenen Steuerhebels (15) vorgesehen ist und vorzugsweise als langlochartige Lochbahn ausgeführt ist.

13. Fahrzeug (1) mit einer Abdeckvorrichtung (4) gemäß einem der Ansprüche 1 bis 12.

14. Fahrzeug nach Anspruch 13,
**dadurch gekennzeichnet, dass** eine vertikale Hubbewegung der Deckelkomponente (5) im Wesentlichen normal zur Öffnungsebene der Fahrzeugkarosserie (2) erfolgt und die sich daran anschließende Verstellung der Deckelkomponente (5) in die die Öffnung (6) freigebende Stellung eine Dreh- und Schwenkbewegung der Deckelkomponente (5) um die Drehachse (13) des Steuerelementes (12) umfasst.

15. Fahrzeug nach einem Anspruch 13 oder 14,
**dadurch gekennzeichnet, dass** die Abdeckvorrichtung (4) in einem geschlossenen Abschnitt der Fahrzeugkarosserie (2) angeordnet ist, der in einem unteren Bereich mit einem Wasserablauf (10) ausgeführt ist.

## Claims

1. Covering device (4), in particular charging flap device, with a lid component (5) and a displacement mechanism (11) for the lid component (5) for closing and uncovering an opening (6) in a vehicle body (2), wherein the lid component (5) can be moved under an adjacent area of the vehicle body (2), and with a rail guide system (22), via which the lid component (5) can be moved between a position closing the opening (6) and a position uncovering the opening (6),
**characterized in that** at least one guide element (12) is provided which can be pivoted about a particularly stationary axis of rotation (13) and which is operatively connected with at least two guide levers (14, 15) in coupling areas (12C, 12B1), which are spaced from the axis of rotation (13) and also from one another, wherein coupling elements (18, 19) are provided which rotatably connect the guide levers (14, 15) to the lid component (5) and each engage in a body-fixed guide track (20, 21) of the rail guide system (22), and wherein the guide levers (14, 15) can be moved along the guide tracks (20, 21) during a pivoting of the guide element (12) towards a position which corresponds to the uncovering position of the lid component (5), and during a further pivoting of the guide element (12) towards a position which corresponds to the closing position of the lid component (5), and thereby actuate the lid component (5) in the opening direction or in the closing direction of the opening (6).

2. Covering device according to claim 1,
**characterized in that** the guide tracks (20, 21) are designed to move the lid component (5) during a pivoting movement of the guide element (12) starting from its position corresponding to the closing position of the lid component (5) into the direction of its position corresponding to the uncovering position of the lid component (5), first lowering it in the direction of the vehicle interior preferably vertically normally from a contact position, and then displacing it under the adjacent area of the vehicle body (2).

3. Covering device according to claim 1 or 2,
**characterized in that** the guide tracks (20, 21) of the rail guide system (22) are preferably provided in the form of slot-like tracks fixed to the body.

4. Covering device according to one of the preceding claims,
**characterized in that** the coupling elements (18, 19) are firmly connected to the lid component (5) or to the guide levers (14, 15), and rotatably connected to the lid component (5) or to the guide levers (14, 15), and can be moved in the guide tracks (20, 21) during a pivoting movement the guide lever (14, 15).

5. Covering device according to one of the preceding claims,
**characterized in that** first sections (20A, 21A) of the guide tracks (20, 21) extend away from the opening (6) essentially in the direction of the lifting movement of the lid component (5).

6. Covering device according to one of the preceding claims,
**characterized in that** the first sections (20A, 21A) of the guide tracks (20, 21) are each followed by second sections (20B, 21B) of the guide tracks (20, 21), the courses of which are each at an angle to the courses of the first sections (20A, 21A) of the guide tracks (20, 21) so that a pivoting movement of the guide element (12) in the direction of its second pivoting position results in the movement of the lid component (5), following the lifting movement, under the adjacent area of the vehicle body (2).

7. Covering device according to one of the preceding claims,
**characterized in that** the guide element (12) comprises a first guide lever section (12A) and a second guide lever section (12B), which are firmly connected to one another at the ends, and preferably enclose an acute angle with one another.

8. Covering device according to one of the preceding claims,
**characterized in that** the axis of rotation (13) runs through a free end (12A1) of the first guide lever section (12A), and the second guide lever section (12B) is, in the area of its free end (12B1), rotatably connected to one of the guide levers (14).

9. Covering device according to one of the preceding claims,
**characterized in that** the guide element (12) is, in the connection area (12C) of the guide lever sections (12A, 12B), rotatably connected to one of the guide levers (15).

10. Covering device according to one of the preceding claims,
**characterized in that** the operative connection between the axis of rotation (13) and the lid component (5) via the guide element (12) and the guide levers (14, 15) is designed such that the axis of rotation (13), and rotational axes (16A, 17A) of the guide levers (14, 15), around which the guide levers (14, 15) rotate relative to the guide lever sections (12A, 12B) of the guide element (12), and rotational axes (18A, 19A) of the guide levers (14, 15), around which the guide levers (14, 15) rotate relative to the lid component (5), lie on a straight line (F1, F2) in the closed position of the lid component (5).

11. Covering device according to one of the preceding claims,
**characterized in that** the coupling elements are designed as cylindrical bolts, the longitudinal axes (57A, 58A) of which correspond to the rotational axes of the guide levers relative to the lid component.

12. Covering device according to one of the preceding claims,
**characterized in that** at least one of the coupling elements (18) engages in a further guide track (25), which is provided in the area of the lid component (5) or in the area of the guide lever (15) connected to it, and is preferably designed as an elongated slot-like track.

13. Vehicle (1) with a covering device (4) according to one of claims 1 to 12.

14. Vehicle according to claim 13,
**characterized in that** a vertical lifting movement of the lid component (5) takes place essentially normal to the plane of the opening of the vehicle body (2), and the subsequent movement of the lid component (5) into the position uncovering the opening (6) contains a rotating and pivoting movement of the lid component (5) about the axis of rotation (13) of the guide element (12).

15. Vehicle according to claim 13 or 14,
**characterized in that** the covering device (4) is arranged in a closed section of the vehicle body (2), which is designed with a water drain (10) in a lower area.

## Revendications

1. Dispositif de couverture (4), en particulier dispositif de couvercle de chargement, avec un élément de couvercle (5) et un mécanisme de déplacement (11) pour le composant de couvercle (5) pour fermer et découvrir une ouverture (6) dans une carrosserie de véhicule (2), dans lequel l'élément de couvercle (5) peut être déplacé sous une zone adjacente de la carrosserie de véhicule (2), et avec un système de guidage de rail (22), par lequel l'élément de couvercle (5) peut être déplacé entre une position fermant l'ouverture (6) et une position découvrant l'ouverture (6), **caractérisé en ce qu'**il est prévu au moins un élément de guidage (12) povant pivoter autour d'un axe de rotation particulièrement fixe (13) et qu'il est relié de manière opérationnelle à au moins deux leviers de guidage (14, 15) dans des zones de couplage (12C, 12B1) qui sont éloignées de l'axe de rotation (13) et également l'une de l'autre, dans lesquelles des éléments de couplage (18, 19) sont prévus qui relient de manière rotative les leviers de guidage (14, 15) à l'élément de couvercle (5) et qui s'engagent chacun dans un rail de guidage (20, 21), fixé au corps, du système de guidage de rail (22), et dans lequel les leviers de guidage (14, 15) peuvent être déplacés le long des rails de guidage (20, 21) lors d'un pivotement de l'élément de guidage (12) vers une position correspondant à la position de découverte de l'élément de couvercle (5), et lors d'un autre pivotement de l'élément de guidage (12) vers une position correspondant à la position de fermeture de l'élément de couvercle (5), et ainsi actionner l'élément de couvercle (5) dans le sens de l'ouverture ou dans le sens de la fermeture de l'ouverture (6).

2. Dispositif de couverture selon la revendication 1,
**caractérisé en ce que** les rails de guidage (20, 21) sont conçus pour déplacer l'élément de couvercle (5) pendant un mouvement de pivotement de l'élément de guidage (12) à partir de sa position correspondant à la position de fermeture de l'élément de couvercle (5) en direction de sa position correspondant à la position de découverte de l'élément de couvercle (5), en l'abaissant d'abord dans la direction de l'intérieur du véhicule, de préférence verticalement, normalement à partir d'une position de contact, et en le déplaçant ensuite sous la zone adjacente de la carrosserie du véhicule (2).

3. Dispositif de couverture selon la revendication 1 ou 2,
**caractérisé par le fait que** les rails de guidage (20, 21) du système de guidage des rails (22) se présentent de préférence sous la forme de rails en forme de fente fixés au corps.

4. Dispositif de couverture selon l'une des revendications précédentes, **caractérisé par le fait que** les éléments de couplage (18, 19) sont solidement reliés à l'élément du couvercle (5) ou aux leviers de guidage (14, 15), et reliés de manière rotative à l'élément du couvercle (5) ou aux leviers de guidage (14, 15), et peuvent être déplacés dans les rails de guidage (20, 21) lors d'un mouvement de pivotement du levier de guidage (14, 15).

5. Dispositif de couverture selon l'une des revendications précédentes, **caractérisé par le fait que** les premières sections (20A, 21A) des rails de guidage (20, 21) s'étendent à l'écart de l'ouverture (6) essentiellement dans la direction du mouvement de levage de l'élément de couvercle (5).

6. Dispositif de couverture selon l'une des revendications précédentes, **caractérisé en ce que** les premières sections (20A, 21A) des rails de guidage (20, 21) sont chacune suivies de secondes sections (20B, 21B) des rails de guidage (20, 21), dont les parcours sont chacun à un angle par rapport aux parcours des premières sections (20A, 21A) des rails de guidage (20, 21), de sorte qu'un mouvement de pivotement de l'élément de guidage (12) dans la direction de sa deuxième position de pivotement entraîne le déplacement de l'élément de couvercle (5), à la suite du mouvement de levage, sous la zone adjacente de la carrosserie du véhicule (2).

7. Dispositif de couverture selon l'une des revendications précédentes, **caractérisé par le fait que** l'élément de guidage (12) comprend une première section de levier de guidage (12A) et une deuxième section de levier de guidage (12B), qui sont fermement reliées l'une à l'autre aux extrémités et forment de préférence un angle aigu l'une par rapport à l'autre.

8. Dispositif de couverture selon l'une des revendications précédentes, **caractérisé par le fait que** l'axe de rotation (13) passe par une extrémité libre (12A1) de la première section du levier de guidage (12A), et que la deuxième section du levier de guidage (12B) est, dans la zone de son extrémité libre (12B1), reliée de manière rotative à l'un des leviers de guidage (14).

9. Dispositif de couverture selon l'une des revendications précédentes, **caractérisé par le fait que** l'élément de guidage (12) est, dans la zone de connexion (12C) des sections de levier de guidage (12A, 12B), relié de manière rotative à l'un des leviers de guidage (15).

10. Dispositif de couverture selon l'une des revendications précédentes,
**caractérisé par le fait que** la liaison opérationnelle entre l'axe de rotation (13) et l'élément du couvercle (5) via l'élément de guidage (12) et les leviers de guidage (14, 15) est conçue de manière à ce que l'axe de rotation (13) et les axes de rotation (16A, 17A) des leviers de guidage (14, 15), autour desquels les leviers de guidage (14, 15) tournent par rapport aux sections de levier de guidage (12A, 12B) de l'élément de guidage (12), et les axes de rotation (18A, 19A) des leviers de guidage (14, 15), autour desquels les leviers de guidage (14, 15) tournent par rapport à l'élément de couvercle (5), se situent sur une ligne droite (F1, F2) dans la position fermée de l'élément de couvercle (5).

11. Dispositif de couverture selon l'une des revendications précédentes,
**caractérisé par le fait que** les éléments d'accouplement sont conçus comme des boulons cylindriques dont les axes longitudinaux (57A, 58A) correspondent aux axes de rotation des leviers de guidage par rapport à l'élément du couvercle.

12. Dispositif de couverture selon l'une des revendications précédentes,
**caractérisé par le fait qu'**au moins un des éléments de couplage (18) s'engage dans un autre rail de guidage (25), qui est prévu dans la zone de l'élément du couvercle (5) ou dans la zone du levier de guidage (15) qui lui est relié, et qui est de préférence conçu comme un rail allongé en forme de fente.

13. Véhicule (1) avec un dispositif de couverture (4) selon l'une des revendications 1 à 12.

14. Véhicule selon la revendication 13,
**caractérisé par le fait qu'**un mouvement de levage vertical de l'élément de couvercle (5) a lieu essentiellement normalement par rapport au plan de l'ouverture de la carrosserie du véhicule (2), et que le mouvement ultérieur de l'élément de couvercle (5) dans la position découvrant l'ouverture (6) contient un mouvement de rotation et de pivotement de l'élément de couvercle (5) autour de l'axe de rotation (13) de l'élément de guidage (12).

15. Véhicule selon la revendication 13 ou 14,
**caractérisé par le fait que** le dispositif de couverture (4) est disposé dans une section fermée de la carrosserie du véhicule (2), qui est conçue avec un drain d'eau (10) dans une zone inférieure.
